# FASCICULE DE BREVET EUROPEEN

(11) **EP 1 646 514 B1**
(45) Date de publication et mention de la délivrance du brevet: **26.09.2007**
(21) Numéro de dépôt: 04736640.6
(22) Date de dépôt: 11.06.2004
(51) Int. Cl.: B60C 11/13, B60C 11/12

(54) **SCULPTURE DE BANDE DE ROULEMENT AYANT AU MOINS UN ELEMENT INTERCALÉ**
LAUFFLÄCHEPROFIL DAS MINDESTENS EIN EINGESETZTES ELEMENT HAT
TYRE THREADS PROVIDED WITH AT LEAST ONE INTERCALATED ELEMENT

(30) Priorité: 16.06.2003 FR 0307233
(43) Date de publication de la demande: 19.04.2006
(73) Titulaire: Société de Technologie Michelin, 63000 Clermont-Ferrand Cedex 09 (FR)
(72) Inventeur: MERINO LOPEZ, Jose, F-63200 Riom (FR)
(74) Mandataire: Diernaz, Christian
(86) Numéro de dépôt international: PCT/EP2004/006333
(87) Numéro de publication internationale: WO 2004/110791

(56) Documents cités:
- WO-A-01/39994
- PATENT ABSTRACTS OF JAPAN vol. 2002, no. 12, 12 décembre 2002 (2002-12-12) -& JP 2002 234313 A (BRIDGESTONE CORP), 20 août 2002 (2002-08-20) cité dans la demande
- PATENT ABSTRACTS OF JAPAN vol. 2000, no. 19, 5 juin 2001 (2001-06-05) -& JP 2001 030715 A (OHTSU TIRE & RUBBER CO LTD:THE), 6 février 2001 (2001-02-06)

## Description

La présente invention a pour objet une amélioration des bandes de roulement pour des pneumatiques destinés à équiper des véhicules poids lourd; elle concerne en particulier la sculpture de ces bandes de roulement.

Cette invention est notamment, mais pas exclusivement, destinée à être mise en oeuvre pour des pneumatiques à carcasse radiale et destinés aux essieux non moteur des véhicules poids lourd.

De tels pneumatiques comportent en règle générale une armature de carcasse surmontée radialement à l'extérieur par une ceinture de sommet, elle-même surmontée d'une bande de roulement pourvue d'une sculpture formée essentiellement de nervures d'orientation générale circonférentielle délimitées par des rainures de même orientation ou de blocs délimités par des rainures circonférentielles et des rainures transversales ou d'une combinaison de blocs et de nervures.

État de la technique : Dans le cas d'une sculpture de bande de roulement présentant des rainures d'orientation circonférentielle, on a constaté que pour certaines conditions d'usage, des cassures pouvaient apparaître en fond de rainure. Ceci est par exemple le cas lors de manoeuvre de braquage du pneumatique roulant sur un obstacle ou un relief présent sur la chaussée, ledit relief s'insérant à l'intérieur d'une rainure ou bien lors d'une montée sur des obstacles (par exemple : trottoir) avec ou sans efforts de braquage exercés sur le pneumatique de manière simultanée. Au cours de cette manoeuvre de braquage, l'obstacle ou le relief tendent à s'opposer audit braquage, et il en résulte une augmentation des contraintes dans le matériau constitutif de la bande de roulement notamment au fond des rainures.

Il est connu pour éviter les agressions par des objets divers rentrant dans les rainures de disposer près des fonds des rainures des protubérances continues ou discontinues dans la direction de la rainure afin d'empêcher la propagation desdits objets vers l'intérieur de la bande de roulement (en particulier jusqu'à la ceinture de renforcement du sommet du pneumatique). Lors de manoeuvres de braquage, ces protubérances, de faible hauteur (inférieure à 50%a de la profondeur de la rainure), sont en général insuffisantes pour éviter qu'un obstacle rentre, au moins partiellement, dans la rainure au moment même du braquage.

Une autre solution consiste à augmenter très sensiblement la hauteur de ces protubérances dans le but de limiter le plus possible, voire même d'empêcher, l'insertion d'un objet dans la rainure pendant la manoeuvre de braquage. Le document GB 903389 montre une telle solution. Le document japonais 20021234313 montre une sculpture comportant dans une rainure une nervure destinée à réduire l'usure d'une bande de roulement, cette nervure étant pourvue d'une pluralité d'extensions transversales destinées à prendre appui sur les parois des nervures de la sculpture.

Ces solutions présentent toutefois, quelques inconvénients que la présente invention cherche à résoudre. Parmi ces inconvénients, on peut mentionner le risque de voir apparaître des fissures en fond des rainures entre les plots ou nervures et les parois en vis-à-vis desdites rainures ou le risque d'avoir des arrachements de plots en partie ou en totalité. Par ailleurs ces plots ou nervures ne sont pas pleinement efficaces dans le cas qui nous intéresse, à savoir la présence d'un objet dans la rainure s'opposant au braquage du pneumatique (c'est-à-dire nécessitant un plus grand effort de braquage).

L'invention a pour objet une bande de roulement selon la revendication 1.

Par longueur moyenne d'un pont, il faut entendre la dimension d'un pont prise dans une direction parallèle à la trace sur la surface de roulement des faces latérales de l'élément intercalé et de l'élément de sculpture voisin. La distance moyenne entre deux ponts correspond à la longueur de l'espace entre deux ponts de liaison dans la même direction sur une même face latérale. Préférentiellement, la distance entre deux faces latérales reliés par les ponts est au plus égale à 2.0 mm et encore plus préférentiellement à au plus égale à 1.0 mm.

La surface radialement extérieure de l'élément intercalé est en décalage radial par rapport à la surface de contact des éléments de sculpture voisins, c'est-à-dire qu'elle ne touche le sol que lorsque une charge est appliquée sur le pneumatique pourvu de cette bande de roulement (c'est-à-dire lorsque la compression des éléments voisins est suffisante). Le décalage est choisi de manière que cette surface extérieure de l'élément intercalé vienne en contact avec le sol à l'état neuf voire seulement après un usage initial court comparé à la durée totale d'usage de la bande avant retrait pour usure.

Ce qui a été décrit dans le cas d'une bande de roulement comprenant des nervures s'applique aisément au cas d'une bande de roulement comprenant une pluralité de blocs disposés circonférentiellement ou bien transversalement ; par exemple, l'élément intercalé peut aussi bien être une seule nervure continue ou une pluralité de blocs disposés dans la même direction.

Avantageusement, et afin de favoriser l'évacuation de l'eau lors d'un roulage sur chaussée revêtue d'eau, il est judicieux de prévoir que les ponts de liaison ne créent pas de zones fermées, c'est-à-dire de zones sans possibilité d'écoulement autre que par l'ouverture sur la surface de roulement. L'incidence de cette dernière disposition est également favorable sur le bruit en roulage.

Pour réaliser une telle sculpture, on peut employer des techniques connues consistant à mouler l'incision séparant l'élément intercalé d'au moins un élément de sculpture voisin, à l'aide d'un matériau sous forme de feuille ou film dont l'épaisseur correspond à la largeur de l'incision (c'est-à-dire à la distance moyenne entre les faces en vis-à-vis délimitant l'incision) et ayant la caractéristique de résister aux efforts de moulage et de vulcanisation de la bande de roulement, cette feuille présentant une pluralité d'orifices pour laisser passer le mélange de caoutchouc pendant ledit moulage afin de former des ponts de liaison reliant l'élément sacrifié à au moins un élément voisin. Cette feuille est préférentiellement réalisée dans un matériau pouvant s'auto éliminer au cours du roulage par exemple par action de l'humidité sur ledit matériau.

Par ailleurs, une personne du métier est à même de choisir le taux de liaison entre un élément intercalé et les éléments voisins de façon à conférer à la fois une rigidité de liaison suffisante entre lesdits éléments de relief et une souplesse adaptée pour permettre la mise en contact de l'élément intercalé avec la chaussée pendant le roulage.

Par taux de liaison, on entend le rapport entre la surface totale de pontage (c'est-à-dire la somme des surfaces d'intersection de tous les ponts sur une face latérale d'un élément de relief) et la surface totale de la face latérale. Lorsque ce taux est nul cela signifie qu'il n'y a pas de pont, et lorsqu'il est égal à l'unité, cela signifie que les ponts de liaison occupent toute la surface latérale des éléments reliés.

Préférentiellement, un élément intercalé est relié à un élément voisin par une pluralité de ponts de liaison s'étendant dans la direction de la profondeur de la rainure de profondeur V à l'intérieur de laquelle est placé ledit élément intercalé, ces ponts s'étendant entre l'élément intercalé et les éléments voisins sur au moins 80% de la profondeur V.

Lorsque cet élément intercalé est formé par une succession de blocs, il peut être avantageux, outre les liaisons par ponts de gomme avec les éléments de sculpture voisins, de prévoir la présence de ponts de liaison mécanique en mélange de caoutchouc entre lesdits éléments intercalés eux mêmes.

Dans une autre variante d'une sculpture selon l'invention, au moins un élément intercalé est relié à des éléments voisins par des ponts s'étendant de la surface de contact de l'élément intercalé jusqu'au fond de la rainure à l'intérieur de laquelle est prévu l'élément intercalé. Cette variante peut être obtenue en moulant de façon usuelle les surfaces des éléments de sculpture et en moulant dans le même temps des sortes de puits (correspondant aux espaces entre les ponts) s'étendant dans l'épaisseur de la bande de roulement. Ces puits peuvent être ou non régulièrement espacés dans la direction circonférentielle ou transversale selon l'élément intercalé considéré.

Les puits forment alors des parties successives d'une même incision et les espaces remplis de caoutchouc entre ces puits forment des ponts de liaison.

Préférentiellement, chaque puits ou espace, de longueur D dans une direction parallèle à la trace sur la surface de roulement des faces latérales d'un élément intercalé et de son élément de sculpture voisin, a une aire de section comprise entre 0.5 mm² et 10 mm².

Les puits réalisés peuvent prendre toute géométrie de section : en particulier, circulaire, elliptique, rectangulaire, triangulaire, ou demi circulaire, demi elliptique, demi rectangulaire. Pour éviter le plus possible une éventuelle concentration de contraintes en certains points des puits en cours d'usage, il est judicieux d'employer une géométrie de section des puits dont le contour ne comprend pas de point anguleux (ainsi une forme circulaire est préférée à une forme rectangulaire notamment). Par ailleurs, on peut prévoir des élargissements des fonds des puits pour éviter les concentrations d'efforts en fond desdits puits.

Les puits ainsi réalisés peuvent présenter, vus dans un plan de coupe méridien, c'est-à-dire contenant l'axe de rotation du pneumatique pourvu d'une bande de roulement selon l'invention, des inclinaisons appropriées par rapport à une perpendiculaire à la surface de roulement. L'angle d'inclinaison est préférentiellement inférieur ou égal à 25° avec une perpendiculaire à la surface de roulement. Plus préférentiellement encore, l'angle est compris entre 0° et 15°.

Bien entendu, si on désire avoir une performance de drainage satisfaisante lors d'un roulage sur une route recouverte d'eau, il est préférable que les puits formés ne soient pas isolés les uns des autres mais qu'ils soient reliés entre eux pour permettre le passage de l'eau. Dans le cas où l'élément intercalé est orienté transversalement sur la bande de roulement, la méthode de moulage décrite dans le brevet US 6484772 ou encore dans le brevet US 6,143,223 peut être mise en oeuvre.

Dans le cas où l'orientation de l'incision séparant un élément intercalé d'un autre élément de relief est circonférentielle (ou encore longitudinale), la méthode consistant à mouler l'incision avec une feuille ou un film pourvu d'orifices est adaptée. Dans ce dernier cas, on peut également prévoir de former une pluralité de canaux dans la bande de roulement, chacun de ces canaux débouchant à une de ses extrémités sur au moins une surface latérale de ladite bande et sur une autre extrémité dans au moins un puits séparant un élément de relief d'un élément intercalé.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue partielle en perspective d'une bande de roulement pour pneumatique selon l'invention ;

La figure 2 montre une vue en coupe selon la ligne II-II de la figure 1 ;

La figure 3 montre une vue partielle d'un moule pour mouler la sculpture montrée à la figure 1 ;

Les figures 4, 5, 6 montrent, en plan et en coupe, une même variante de bande de roulement selon l'invention dont les éléments intercalés sont des blocs reliés entre eux;

La figure 7 montre une variante selon laquelle un élément intercalé délimite avec un élément voisin une incision inclinée.

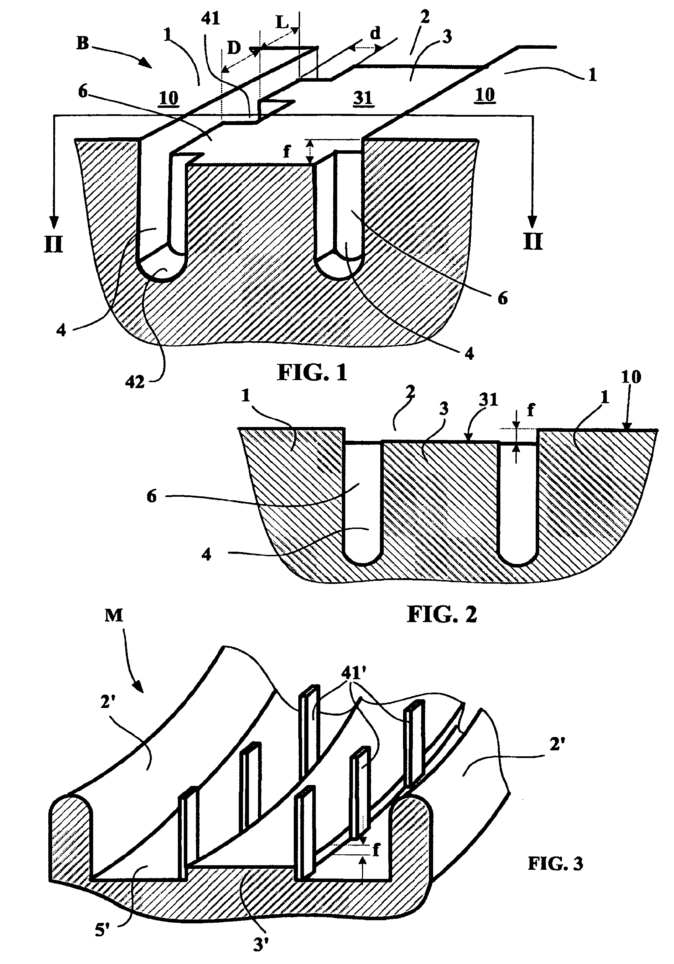

Sur la figure 1, on distingue une vue partielle en perspective d'une bande de roulement B selon l'invention. Sur cette vue partielle, on distingue deux nervures 1 délimitant une rainure 2 à l'intérieur de laquelle est disposée une nervure intercalée 3 s'étendant dans la même direction que les nervures voisines 1. Cette nervure intercalée 3 délimite avec chacune des nervures 1 voisines une incision 4 d'une largeur de 0.6 mm.

Par ailleurs, cette nervure intercalée 3 est reliée mécaniquement aux deux nervures 1 voisines par des ponts de liaison 6 de gomme.

Ces ponts 6 de liaison s'étendent dans toute la hauteur de la nervure intercalée 3 en allant de la surface de contact 31 dudit élément jusqu'au fond 42 des incisions 4. Sur la coupe II-II réalisée sur la figure 1 et montrée à la figure 2, on distingue la nervure intercalée 3 dont la surface de contact 31 avec le sol est décalée par rapport à la surface de contact 10 des nervures voisines 1 avec un décalage f approprié pour avoir un contact de la face de contact 31 de la nervure intercalée 3 avec la chaussée lors du roulage. Ce contact est réalisé soit dès l'utilisation du pneumatique pourvu de cette bande de roulement neuve, soit après un usage initial.

Dans cette variante, les ponts 6 ont une longueur L et une largeur d et sont séparés les uns des autres par des puits 41 dont la section est rectangulaire d'une longueur D et d'une largeur d.

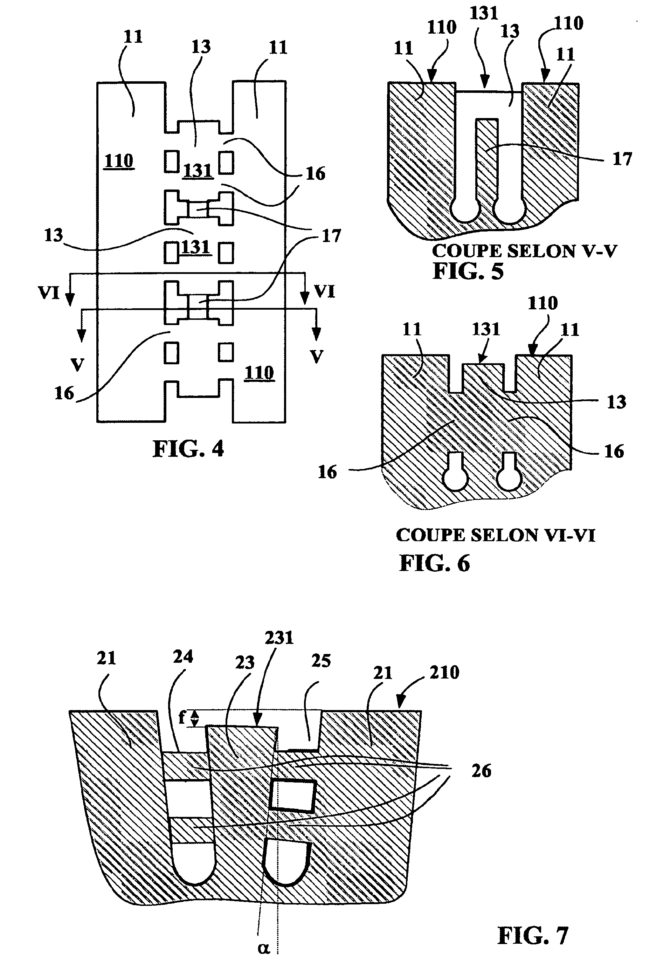

La réalisation d'une telle sculpture est par exemple obtenue avec un moule M dont une partie seulement est montrée à la figure 3. Sur cette figure 3, on distingue sur une surface 5' du moule M des nervures 2' pour mouler des rainures délimitant des nervures principales.

Entre ces nervures 2' sur le moule est disposée une nervure intermédiaire 3' formant relief à la surface du moule avec un décalage f, cette nervure intermédiaire 3' ayant une hauteur inférieure à la hauteur des nervures voisines 2', lesdites hauteurs étant mesurées par rapport à la surface du moule. En outre, le long de chaque face latérale de la nervure intermédiaire 3' sont disposées, régulièrement réparties, une pluralité de tiges 4' de section rectangulaire.

L'exemple décrit emploie des tiges 41' de section rectangulaire, mais n'est bien sûr pas limité à cette géométrie et en particulier d'autres formes de section peuvent être employées comme des formes circulaires, elliptiques, triangulaires. Pour éviter les risques de formation de fissures en fond des puits, il est préférable de pourvoir la partie la plus à l'intérieur de chaque tige 41' avec une partie élargie.

Dans une autre variante, les ponts de liaison peuvent être formés seulement à partir d'une hauteur équivalente à un certain pourcentage de la profondeur de l'incision sous la surface de contact de l'élément de sculpture intercalé comme c'est le cas avec la variante montrée avec les figures 4 à 6.

Sur la figure 4, on aperçoit une vue en plan de la surface de roulement d'une bande de roulement selon l'invention comprenant au moins deux nervures 11 et entre ces nervures une série de blocs intercalés 13; chacun desdits blocs 13 ayant une surface externe 131 légèrement décalée sous la surface de contact 110 des nervures 11 encadrant lesdits blocs 13.

Chacun de ces blocs 13 est relié sur ses deux faces latérales aux deux nervures 11 par des ponts de liaison 16 dont on peut voir à la figure 6 (coupe selon la ligne VI-VI) qu'ils sont eux mêmes décalés radialement vers l'intérieur par rapport à la surface de contact 131 des éléments intercalés 13. Ces ponts 16 ne s'étendent dans la direction de la profondeur que sur une partie de la profondeur de l'incision séparant les blocs intercalé des éléments de sculpture voisins de manière à conserver une performance satisfaisante en drainage de l'eau lors d'un roulage sur chaussée mouillée.

En outre, ces blocs intercalés 13 sont reliés entre eux par des ponts de liaison 17 visibles sur la coupe selon la ligne V-V représentée à la figure 5. Bien entendu, ceci n'est qu'une variante et les ponts de liaison 17 entre les blocs peuvent être omis.

Préférentiellement, seules les rainures les plus sensibles aux cassures en fond de rainure sont pourvues d'éléments de relief intercalés et les autres rainures sont laissées sans élément intercalé pour permettre un drainage suffisant et ainsi maintenir des performances nécessaires en particulier sur chaussée mouillée.

Dans une autre variante montrée à la figure 7, un élément de relief intercalé est relié par une pluralité de ponts de gomme à deux nervures. Dans cette variante, un élément intercalé 23 est disposé entre deux éléments voisins 21 et présente une surface de contact 231 décalée d'une quantité f par rapport à la surface externe 210 des éléments voisins 21. Cet élément intercalé 23 délimite avec chaque élément voisin une incision 25 inclinée d'un angle moyen α avec une perpendiculaire à la surface de contact 231 de l'élément intercalé.

Présentement l'angle α est de 10° et tel que la largeur de l'élément intercalé vue de la surface de roulement de la bande va en diminuant avec l'usure de ladite bande.

L'élément intercalé 23 est relié à chaque élément voisin 21 par des ponts de liaison 26 décalés dans le sens de la profondeur de l'incision inclinée 25.

Préférentiellement, l'angle moyen α d'inclinaison des incisions entre un élément intercalé et un élément voisin avec une perpendiculaire à la surface de contact de l'élément intercalé est au plus égal à 25°.

L'invention n'est pas limitée aux exemples décrits et représentés et diverses modifications peuvent y être apportées sans sortir de son cadre. En particulier, l'angle d'inclinaison des incisions peut être choisi de manière à ce que la largeur de l'élément intercalé augmente avec l'usure. On peut également combiner la présence d'une incision inclinée d'un angle plus grand que zéro et une autre incision faisant un angle nul avec une perpendiculaire à la surface de roulement.

Bien sûr, cette invention peut être combinée à la présence axialement à l'extérieur des nervures bords d'une nervure dite sacrifiée vis-à-vis de l'usure afin de protéger cette nervure bord d'une usure irrégulière sur ses arêtes. Cette nervure sacrifiée a une surface de contact externe destinée à venir en contact avec la chaussée en roulage, la différence des rayons de roulement de cette nervure sacrifiée et de la nervure bord conduit à amplifier les glissements sur la nervure sacrifiée entraînant ainsi une usure prononcée sur cette nervure. Cette nervure décalée dans le sens de l'épaisseur est séparée de la nervure bord par une incision étroite dont les parois en vis-à-vis sont reliées par une pluralité de ponts de liaison en mélange de caoutchouc.

Dans le cas où les ponts sont formés dans des rainures d'orientation générale circonférentielle (longitudinale) et délimitent des espaces fermés (à l'exception de l'ouverture sur la surface de roulement), il peut être avantageux de pouvoir la bande avec une pluralité de canaux débouchant d'un côté à l'extérieur de la bande et de l'autre côté dans les espaces.

Afin de conserver une longueur sensiblement constante d'arêtes de gomme dans la surface de contact de la bande de roulement avec la chaussée, il est avantageux de disposer les ponts de liaison de manière décalés dans la direction de l'élément intercalé.

## Revendications

1. Bande de roulement (B) en mélange de caoutchouc pour pneumatique, cette bande de roulement étant pourvue d'une sculpture formée par une pluralité d'éléments de relief (1, 11, 21) comportant des faces de contact (10, 110, 210) pour venir en contact avec la chaussée pendant le roulage, chaque élément de relief comportant des faces latérales délimitant des rainures 4 ou incisions, cette bande (B) comprenant en outre au moins un élément intercalé (3, 13, 23) disposé dans une rainure (4) entre deux éléments de relief voisins (1, 11, 21), cet élément intercalé ayant des faces latérales et une face de contact (31, 131, 231), ladite face de contact étant décalée radialement vers l'intérieur de la bande par rapport aux faces de contact (10, 110, 220) des éléments voisins de manière à pouvoir être en contact avec la chaussée en roulage, cet élément intercalé étant relié par deux de ses faces latérales aux éléments de relief voisins (1, 11, 21) par une pluralité de ponts de liaison (6, 16, 26) en mélange de caoutchouc de longueur L, les ponts de liaison délimitent avec l'élément intercalé et chaque élément de relief voisin, une pluralité de puits (41) de longueur moyenne D, la longueur D et la distance moyenne L étant mesurées suivant une direction parallèle à la trace sur la surface de roulement des faces latérales d'un élément intercalé (3) et de l'élément de sculpture voisin (1), la bande de roulement étant **caractérisée en ce que** la longueur moyenne L des ponts de liaison est comprise entre une fois et six fois la longueur moyenne D des puits.

2. Bande de roulement selon la revendication 1 **caractérisée en ce que** les puits formés ont une profondeur V, les ponts de liaison (6, 16, 26) s'étendant dans la direction de la profondeur sur au moins 80% de la profondeur V.

3. Bande de roulement selon la revendication 1 ou la revendication 2 **caractérisée en ce que** les puits (41) ont, en projection sur la surface de roulement, une aire moyenne de section comprise entre 0.5 et 10 mm².

4. Bande de roulement selon la revendication 3 **caractérisée en ce que** chaque puits ou incision est incliné par rapport à une perpendiculaire à la surface de roulement d'un angle inférieur ou égal à 25°.

5. Bande de roulement selon la revendication 4 **caractérisée en ce que** l'angle d'inclinaison des puits est tel que la surface de contact de l'élément intercalé change avec l'usure.

6. Bande de roulement selon la revendication 5 **caractérisée en ce que** la surface de contact de l'élément intercalé avec la chaussée diminue avec l'usure.

7. Bande de roulement selon l'une des revendications 1 à 6 **caractérisée en ce que** la trace sur la surface de roulement des faces latérales d'un élément intercalé (3) et de l'élément de sculpture voisin (1) est d'orientation générale longitudinale.

8. Bande de roulement selon la revendication 7 **caractérisée en ce que** au moins un élément intercalé est une nervure continue.

## Claims

1. - A tread (B) of rubber mix for tyres, this tread being provided with a tread pattern formed by a plurality of elements in relief (1; 11, 21) comprising contact faces (10, 110, 210) for coming into contact with the roadway during travel, each element in relief comprising lateral faces defining grooves (4) or incisions, this tread (B) furthermore comprising at least one inserted element (3, 13, 23) arranged in a groove (4) between two neighbouring elements in relief (1, 11, 21), this inserted element having lateral faces and a contact face (31, 131, 231), said contact face being offset radially towards the inside of the tread relative to the contact faces (10, 110, 220) of the neighbouring elements so as to be able to be in contact with the roadway during travel, this inserted element being connected by two of its lateral faces to the neighbouring elements in relief (1, 11, 21) by a plurality of connecting bridges (6, 16, 26) of rubber mix of length L, the connecting bridges defining with the inserted element and each neighbouring element in relief a plurality of wells (41) of average length D, the length D and the average distance L being measured in a direction parallel to the trace on the rolling surface of the lateral faces of an inserted element (3) and of the neighbouring tread pattern element (1), the tread being **characterised in that** the average length L of the connecting bridges preferably being between one and six times the average length D of the wells..

2. - A tread according to Claim 1, **characterised in that** the wells formed have a depth V, the connecting bridges (6, 16, 26) extending in the direction of the depth over at least 80% of the depth V.

3. - A tread according to Claim 1 or Claim 2, **characterised in that** the wells (41), when projected onto the rolling surface, have an average sectional area of between 0.5 and 10 mm².

4. - A tread according to Claim 3, **characterised in that** each well or incision is inclined relative to a line perpendicular to the rolling surface by an angle less than or equal to 25°.

5. - A tread according to Claim 4, **characterised in that** the angle of inclination of the wells is such that the contact surface of the inserted element changes with wear.

6. - A tread according to Claim 5, **characterised in that** the contact surface of the inserted element with the roadway decreases with wear.

7. - A tread according to one of Claims 1 to 6, **characterised in that** the trace on the rolling surface of the lateral faces of an inserted element (3) and of the neighbouring tread pattern element (1) is of general longitudinal orientation.

8. - A tread according to Claim 7, **characterised in that** at least one inserted element is a continuous rib.

## Patentansprüche

1. Lauffläche (B) aus einer Kautschukmischung für einen Luftreifen, wobei diese Lauffläche mit einem Profil versehen ist, das aus einer Vielzahl von Reliefelementen (1, 11, 21) ausgebildet ist, welche Kontaktflächen (10, 110, 210) umfassen, um während des Fahrens mit der Fahrbahn in Kontakt zu kommen, wobei jedes Reliefelement Seitenflächen umfasst, welche die Nuten (4) oder Einschnitte begrenzen, wobei diese Lauffläche (B) außerdem mindestens ein eingesetztes Element (3, 13, 23) umfasst, das in einer Nut (4) zwischen zwei benachbarten Reliefelementen (1, 11, 21) angeordnet ist, wobei dieses eingesetzte Element Seitenflächen und eine Kontaktfläche (31, 131, 231) aufweist, wobei die Kontaktfläche radial zum Inneren der Lauffläche im Verhältnis zu den Kontaktflächen (10, 110, 220) der benachbarten Elemente dergestalt versetzt ist, dass es beim Fahren mit der Fahrbahn in Kontakt sein kann, wobei dieses eingesetzte Element über zwei seiner Seitenflächen mit benachbarten Reliefelementen (1, 11, 21) über eine Vielzahl von Verbindungsstegen (6, 16, 26) aus einer Kautschukmischung mit einer Länge L verbunden ist, wobei die Verbindungsstege mit dem eingesetzten Element und jedem benachbarten Reliefelement eine Vielzahl von Senken (41) mittlerer Länge D begrenzen, wobei die Länge D und der mittlere Abstand L in eine parallele Richtung zu der Spur auf der Laufoberfläche der Seitenflächen eines eingesetzten Elementes (3) und des benachbarten Profilelementes (1) gemessen werden, wobei die Lauffläche **dadurch gekennzeichnet ist, dass** die mittlere Länge L der Verbindungsstege zwischen der einfachen und sechsfachen mittleren Länge D der Senken liegt.

2. Lauffläche nach Anspruch 1, **dadurch gekennzeichnet, dass** die ausgebildeten Senken eine Tiefe V aufweisen, wobei sich die Verbindungsstege (6, 16, 26) in die Richtung der Tiefe über mindestens 80% der Tiefe V erstrecken.

3. Lauffläche nach Anspruch 1 oder Anspruch 2, **dadurch gekennzeichnet, dass** die Senken (41), in Verlängerung auf der Laufoberfläche, eine mittlere Querschnittsfläche aufweisen, die zwischen 0,5 und 10 mm² beträgt.

4. Lauffläche nach Anspruch 3, **dadurch gekennzeichnet, dass** jede Senke oder jeder Einschnitt im Verhältnis zu einer Senkrechten auf der Laufoberfläche in einem Winkel von weniger oder gleich 25° geneigt ist.

5. Lauffläche nach Anspruch 4, **dadurch gekennzeichnet, dass** der Neigungswinkel der Senken dergestalt ist, dass sich die Kontaktoberfläche des eingesetzten Elementes mit der Abnutzung verändert.

6. Lauffläche nach Anspruch 5, **dadurch gekennzeichnet, dass** die Kontaktoberfläche des eingesetzten Elementes mit der Fahrbahn im Verlauf der Abnutzung abnimmt.

7. Lauffläche nach einem der Ansprüche 1 bis 6,
**dadurch gekennzeichnet, dass** die Spur auf der Laufoberfläche der Seitenflächen eines eingesetzten Elementes (3) und des benachbarten Reliefelementes (1) in einer allgemeinen Längsausrichtung liegt.

8. Lauffläche nach Anspruch 7, **dadurch gekennzeichnet, dass** mindestens ein eingesetztes Element aus einer durchgehenden Rippe besteht.
